# EUROPEAN PATENT SPECIFICATION

(11) **EP 2 548 854 B1**
(45) Date of publication and mention of the grant of the patent: **22.06.2016**
(21) Application number: 11380058.5
(22) Date of filing: 18.07.2011
(51) Int. Cl.: C04B 111/00, C04B 111/54, C04B 26/02, C04B 26/06, C04B 26/14, C04B 26/16, C04B 26/18, C04B 41/50

(54) **Hybride polymer coating for petrous or ceramic substrates, petrous or ceramic substrate and obtaining method**
Hybridpolymerbeschichtung für versteinerte oder keramische Substrate, versteinertes oder keramisches Substrat und Verfahren zu dessen Erhalt
Revêtement hybride de polymères pour substrats pétreux ou céramiques, substrat pétreux ou céramique et procédé d'obtention

(43) Date of publication of application: 23.01.2013
(60) Divisional application: 15003325.6
(73) Proprietor: Silicalia S.L., 46004 Valencia (Valencia) (ES)
(72) Inventor: Sanchis Brines, Francisco Antonio, 46004 Valencia (Valencia) (ES); Schoneveld, Erik, 46728 Marxuquera Gandia, Valencia (ES); Ortola, Alberto, 46725 Rótova, Valencia (ES); Sanchez Sevilla, Bernardo, 04850 Cantoria, Almeria (ES)
(74) Representative: Torner Lasalle, Elisabet

(56) References cited:
- WO-A1-2011/028125
- WO-A2-2004/035502

## Description

The present invention relates, in a first aspect, to a coating which provides a very thin layer (thickness being at most of the order of 2 mm and generally considerably less) applicable to natural or artificial petrous substrates, particularly to marble agglomerate, as well as to ceramic substrates on which the coating is firmly adhered to.

The surfaces of marble agglomerate comprise calcareous mineral loads having as main drawbacks a low resistance to scratching and poor chemical resistance against acids. These properties are determined by the mineral used as load which on the other hand, since the marble is not very abrasive, provides the advantage of being able to use a manufacturing process with high productivity if compared with the manufacturing of quartz boards and tiles.

The proposed coating provides a hardness and resistance to chemical attack comparable to quartz, allowing using substrates of reduced thickness of the order of 6 to 12 mm, being able to use materials recycled from the natural stone cutting production process for the constitution of said substrate as well as the coating, increasing the recyclable material content of the petrous agglomerate and of the coating.

In a second aspect the invention refers to a petrous or ceramic substrate provided with a hybrid polymer coating according to the principles of this invention.

Lastly, the invention also refers to a method for obtaining the mentioned hybrid polymer coating which is carried out on a petrous or ceramic substrate and which renders a product protected by said coating.

### Background of the Invention

EP 790222 describes a stone agglomerate comprising a first component with fine inorganic particles and a second component with micro-particles, wherein said fine particles or aggregates thereof are transparent and are coated by a layer of inorganic or organic material having a thickness comprised between 5 and 50 microns such that said layer is partially fragmented and exposes the component on the surface producing an accentuated reflection of the light.

Patent US 4640850 describes a composite slab incorporating a sheet of marble or petrous coated on its visible face by a sheet of transparent glass. This patent refers to the preceding patent US 4177789 describing a method for obtaining marble boards having thicknesses less than 10 mm and generally up to 4 mm, which are reinforced on their not visible face by means of a glass fiber covering, indicating that the visible face of the slab is provided with some type of reinforcement. EP 799949 describes a thin natural stone element joined by a transparent polyester resin to a glass plate support. EP 1375130 describes a composite slab with a multilayered coating based on overlapping glass plates.

Patent WO 0114133 describes a method for obtaining a multilayer composite slab with a sandwich type structure with an intermediate layer of expanded light material comprised between an upper layer of stone agglomerate obtained by mixing crushed stone, powder and a binder in required proportions, introducing the mixture in a mold and performing a process of vibro compression in said mold and optionally a lower layer of agglomerate with similar characteristics.

Patent JP 11138703 describes a multilayer material for laminating having flexion and impact high performances and incorporating a visible surface of wood agglomerate, calcium carbonate, hollow crystal balls, talc, etc., comprising flexible middle support layers.

Patent FR 2868099 describes a decorative panel for panels or ceilings with a multi-layer surface of a thermoplastic composite with load mineral, fibers or other particles attached to an extruded polystyrene base.

GB 2224283 describes a method for obtaining artificial petrous stone for flooring and facades comprising a step of crushing marble material into particles of approximately 7 mm, a step of mixing said material with other additional materials including silica sand subjected to heating, and at least one polymerisable resin, a step of molding the mixture thus obtained with a combined action of vibration and compression under vacuum and a step of polymerizing the resin.

JP 8156216 refers to an artificial petrous product with a surface provided with a layer containing marble particles comprising a mixture of a non saturated polyester resin, calcium carbonate powder and a curing agent, obtained in molding.

JP 28111951 describes an artificial marble with a granular pattern obtained by laminating three classes of layers with resins incorporating different components such as crushed stones, ceramic, fibers, glass, etc.

WO2011028125 is the closest prior art. This document aims to modify a coating formulation in such a way that the solvent proportion is reduced (the solid content is increased) while maintaining a suitable viscosity and to improve wear resistance of the coating. This problem is solved by means of replacing conventional fillers in water based and solvent based coatings by microsilica. The coating formulation of document D1 comprises a liquid solvent (e.g. water), up to 37% by weight of a resin and 2-15% by weight of microsilica. The formulation may optionally comprise 10-22% by weight of an additional filler and further additives, such as pigment, curing agent or polymerization initiator. Said filler may be talc and microsilica. The formulation is formed into a dispersion and is applied to a substrate and UV cured. According to the working examples the coating thickness is about 150 µm or 25 µm.

WO 2004/035502 discloses a method for forming a particle mass comprising at least two particle populations arranged in a desired graded relationship. The process is based on vibration of particle masses formed as separate layers one on the other. The vibration allows the migration of particles from one layer to the other across layer boundaries and produces the desired graded arrangement of particles. Such a migration is the result of different migration rates of different particle sizes. As particle may be used inorganic or organic material, such as ceramics (silicon carbide, alumina, silicon nitride, zirconium oxide, boron carbide), metals and synthetic resin materials. Coatings can be formed by melting the particles (fusion of the graded particle mass or chemical reaction, such as cross-linking).

Unlike the mentioned prior arts, the present invention proposes:
- a hybrid low viscosity polymer coating (in a condition prior to curing) different from those, described in terms of the fact that it comprises several components of siliceous origin, particularly micronized powder and gravels of different grading bound by a polymerisable resin;
- a distribution of the components of the coating, such that a greater concentration of inorganic loads of at least 75% is obtained in the areas closest to the coating-substrate interphase, thus allowing, with a very thin layer of the order of 0,5 mm, the possibility of obtaining an efficient protection of the substrate and meeting the mechanical and chemical requirements of the substrate + coating assembly in the same or similar extent than those of a quartz or granite.

The coating of this invention is not applied in molding, but directly on the substrate by means of an applicator with retention of said coating until the complete curing thereof.

The main objectives of the invention are described below:
a) to obtain products (substrate incorporating the coating) with a surface having a hardness and chemical resistance comparable to quartz having similar aspect but at a lower production cost;
b) to apply a thinnest possible surface layer (thickness < 1 mm);
c) enabling the use of defective or damaged slabs of marble agglomerate by applying the mentioned coating as a finish;
d) enabling to include slurries and cuttings from a marble agglomerate treatment plant or other types of waste coming from demolitions, home renovations or wastes from other industries in the composition of the base substrate or support.
The above objectives are achieved by the method of claim 1 and the coated substrates of claim 7.

### Brief Description of the Invention

The hybrid polymer coating of this invention, which can be applied to petrous or ceramic substrates, is a micro coating formed by a mixture of micronized powder and gravels of silica, quartz and/or glass of different agglomerate grading by means of a heat stable polymer and/or polymerisable thermoplastic and which enable using a substrate or base board of minimum thicknesses (4-6 mm) on which the mentioned coating that firmly adheres to the same is applied.

In greater detail, the invention provides a hybrid polymer coating for petrous or ceramic substrates, providing a very thin surface layer (thickness of the coating comprised between 0.1 and 2 mm and preferably less than 1 mm) firmly adhered to the substrate obtained by steps of preparing a mixture of micronized powder, one or more gravels, resin selected from polyurethane, polyester, epoxy or acrylic, catalyst and pigments, subjected to stirring, subsequent curing (with the addition or generation of heat, for example by microwaves) and final polishing of the coating consolidated on the substrate to smooth and normalize the surface.

A coating (not according to the invention) which is applied on the finished product (board or marble tile or other artificial petrous substrate) is characterized by comprising a mixture with the following composition:
- 10-25% by weight of micronized powder functioning as a cement, containing inorganic loads mainly of petrographic origin;
- 40-60% by weight of inorganic load gravels of petrous origin comprising quartz, silica, silica sand, glass, recycled mirrors, silicon, etc., of sizes comprised between 0.063 - 2 mm;
- 10-40% by weight of a base resin selected from polyurethane, polyester, epoxy or acrylic; and
- approximately 5% by weight of pigments and other additives for said resin including a catalyst.

In any case, the proportion of resin will be of at least 10-30%.

The addition of pigments of the order of 2% by weight must be understood as optional depending on the characteristics of the natural or artificial petrous substrate to which the coating would be applied.

Furthermore, the fact that it can reach a proportion of the mentioned gravel and micronized powder of the coating of up to 90% in a first inner most area (1/3 of the thickness), corresponding to the interphase between coating and surface of the petrous or ceramic substrate, of the order of 1-15% close to the visible surface and 20-50% in a middle area, the semi-finished (i.e., non-polished) coating of this invention is distinctive considering that the same is divided into three layers of the same thickness.

In a possible embodiment of the invention the following proportion of gravel and micronized powder could be obtained:
▪ lower third of the coating: between 55%-90%
▪ middle third of the coating: between 16%-60%;
▪ Upper third of the coating: between 1%-15%.

According to another possible embodiment the proportions of gravel and micronized powder would be the followings:
▪ lower third of the coating: between 70%-95%
▪ middle third of the coating: between 10%-70%;
▪ upper third of the coating: between 1%-30%.

The visible surface of the coating is finished by a mechanical treatment selected from polishing with abrasives, polishing with brushes or sand blasting and/or by a chemical treatment of acid etching such that a visible surface in which first layer has been removed from the area with less gravel concentration and with more resin concentration is obtained for obtaining a final product with a very high gravel and very low resin concentration. The process of polishing further removes any particle of gravel protruding from the mixture. This step of treatment also allows working with gravels of different grading and diameters close to diameters of the thickness of the coating or final thin layer obtained (i.e., gravel sizes of 1.2 mm, for example, for a coating of 0.8 mm), since the protruding parts which could remain will be removed by polishing or equivalent mechanical treatment. Thus a hardness of the surface layer greater than 5 Mohs is obtained.

According to a preferred embodiment the mentioned mixture comprises gravels of different nature and grading.

The invention also relates to a board or petrous or ceramic substrate provided with a coating like the one mentioned and to a method for obtaining it.

The mentioned method comprises the following steps
- preparing a base mixture comprising a first gravel, for example of quartz, silica, silica sand, glass, or mirror of sizes comprised between 0.1 - 2 mm and micronized powder with inorganic loads of petrographic origin in a mixer;
- stirring the mentioned mixture in said mixer;
- preparing a base resin selected from polyurethane, polyester, epoxy or acrylic;
- adding said resin to the mentioned mixture in said mixer, with a catalyst, additives and optionally pigments, and subsequent stirring;
- creating a vacuum inside said mixer;
- applying the mixture obtained on the substrate; and
- vibrating the substrate with the mixture applied on top on a vibration table and retaining the mixture on the substrate; and
- controlled supplying of thermal energy for curing the mixture retained on the substrate until the curing thereof.
- finishing said coating by a mechanical treatment selected from polishing with abrasives, polishing with brushes or sand blasting and/or by a chemical treatment of acid etching of the coating polymer.

Other features of the invention will be seen in view of the following description of several examples of application given by way of non-limiting illustrative example according to the following detail.

### Detailed Description of the Invention

The coating of the invention establishes, as a first requirement, a preferred thickness of the order of 0.5 mm (with a maximum of 2 mm) and the use of gravels of quartz or silica sand with a grain size comprised in the range of 0.1 - 0.6 mm in said preferred example.

This coating comprises, according to different tests performed the following main components:
1. Micronized powder of silica sand, quartz and/or glass functioning as a cement.
2. Gravels of quartz, glass and/or silica sand of different sizes which will confer mechanical strength to the coating
3. Polymerisable resin of polyurethane, polyester, epoxy or acrylic as a binder.
4. Additives for said resin comprising air release agents, adhesion promoters, UV absorbers, stabilizers, moistening agents to reduce viscosity (a boric acid ester solution, for example), antistatic agents, water repellents (preferably using silanes and siloxanes), self cleaning agents (using e.g., fluorocarbonated polymers), and natural and/or synthetic fibers.
5. Pigments (optional)

The selection of binder or resin used depends on the substrate to which the coating must be firmly adhered, and further determines:
- the amount of load admitted in the formulation of the coating (final viscosity of the casting) and consequently the metering equipment;
- the useful time for handling-maneuverability of the casting;
- the polymerization time and therefore the curing system;
- chemical properties, resistance to ageing, etc.

The invention proposes a hybrid polymer coating for petrous or ceramic substrates in the form of a very thin (of a thickness comprised between 0.1 and 2 mm and, preferably between 0.1 and 0.7 mm) surface layer which is arranged and is firmly adhered to the substrate, comprising a mixture of the mentioned components with the following composition:
- 10-25% by weight of micronized powder of siliceous materials comprising aluminium oxides, quartz and/or glass, or calcareous materials, with inorganic loads of petrographic origin;
- 40-60% by weight of inorganic load gravels of petrous origin and/or comprising quartz, silica, silica sand, glass, recycled mirrors, silicon, etc., of sizes comprised between 0.1 - 2 mm;
- 10-40% by weight of a polymerisable base resin selected from polyurethane, polyester, epoxy or acrylic;
- approximately 3% by weight of additives particularly catalysts for said resin;
- proportion of the mentioned gravel and micronized powder of the coating of up to 90% (and generally comprised between 55% and 85%) in one lower third or inner most area corresponding to the interphase between the coating and surface of the petrous or ceramic substrate, of the order of 1-15% in the upper third close to the visible surface and of 1.5- 60% in one middle third between both inner area and area adjacent to the surface.

Depending on the purpose or final location of the elements, for example, tiles obtained from the petrous board with coating, the mentioned mixture will further include up to 2% by weight of pigments.

The mentioned mixture will comprise particularly gravels of different nature and grading.

During the tests performed, the sequence and the mixture of the different ingredients of the formulation was detected as the most significant.

The order and method for preparing the mixture can be the following:
- preparing a base mixture comprising a first gravel, for example, of quartz, silica, silica sand, glass, or mirror of sizes comprised between 0.1 - 2 mm and micronized powder with inorganic loads of petrographic origin, in a mixer;
- stirring the mentioned mixture;
- preparing a base resin selected from polyurethane, polyester, epoxy or acrylic;
- adding said resin to the mentioned mixture in said mixer with a catalyst, additives and optionally pigments, and subsequent stirring;
- creating a vacuum inside said mixer;
- applying the mixture obtained on the substrate; and
- vibrating the substrate with the mixture applied on top of the same on a vibration table.
- controlled supplying of thermal energy for curing of the mixture, retained on the substrate
- finishing said coating by a mechanical treatment selected from polishing with abrasives, polishing with brushes or sand blasting and/or by a chemical treatment of acid etching of the coating polymer.

Referring to the preparation of the resins, if it is an acrylic resin: an acrylic resin diluted in methyl methacrylate + coupling agent of siliceous origin + air release agent + humectant (if necessary) + catalyst) can be used.

If it is a polyurethane resin: a mixture of polyisocyanates + polyol + coupling agent of siliceous origin + water capturing molecular sieve + catalyst) can be used.

And, if it is an epoxy-type resin: a resin with epoxy groups + coupling agent of siliceous origin + air release agent + accelerant (if necessary) + epoxy resin cross linking agent (amines, anhydrides, carboxylic acids, etc.) can be used.

In the laboratory tests, the components have been mixed by means of a rod stirrer and in the pilot plant tests with a screw mixer.

The coating applied on the indicated artificial petrous substrate has its surface finished by a mechanical treatment which can be polishing with abrasives, polishing with brushes or sand blasting and substituted or completed by a chemical treatment of acid etching.

After the curing, a step of cutting the substrate with the consolidated coating into plates with a specific format or eventually in the form of tiles has also been provided.

### Tests: Samples of substrate with coating produced according to the method

Two samples formed by respective square-shaped agglomerated stone specimens of dimensions 15 x 15 x 1.4 cm³ with an applied surface hybrid polymer coating like the one described were used. The samples therefore comprise a substrate with the described consolidated coating (i.e., it is a sample with the vibrated, cured and polished mixture).

The visual study of the inorganic particle dispersion was carried out by Scanning Electron Microscopy (SEM). To perform quantitative and representative estimation of the sample, the specimen was transversely cut and micrographs were made in 6 different areas, reflecting in each case the coating/substrate interphase.

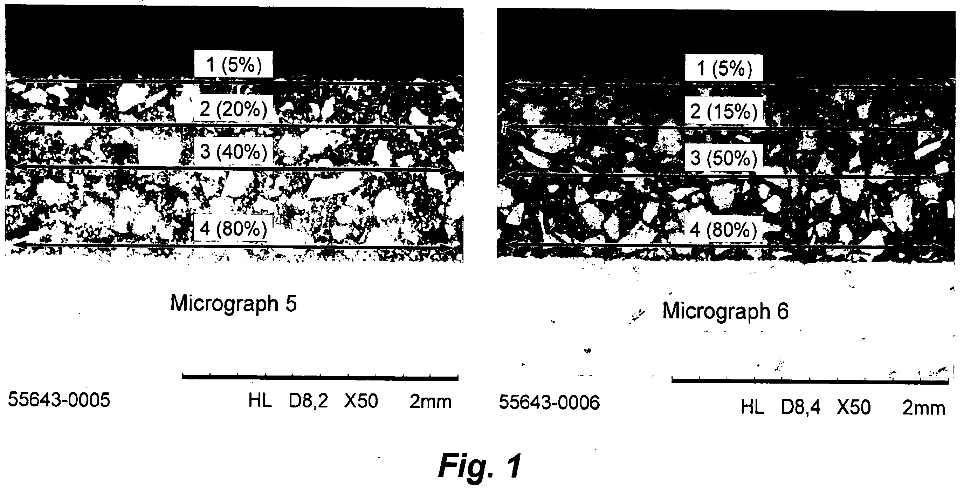

Then, in each micrograph four sub-areas in which the percentage of particles was visually estimated following a standard for microscopy observation (Figure 1) were differentiated.

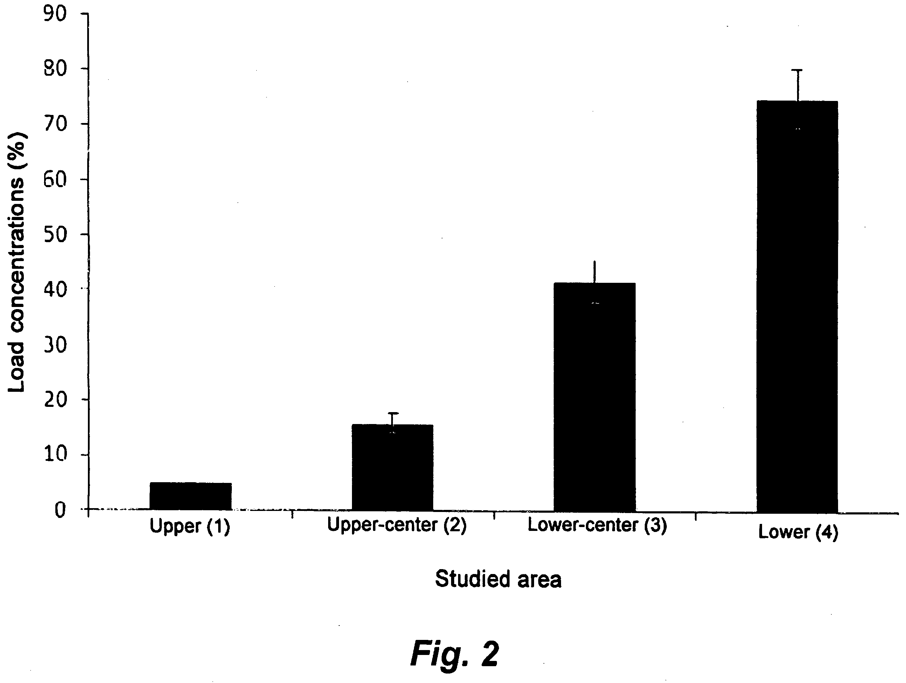

Generally, an increase in the accumulation of the inorganic particles is observed in the areas closest to the interphase, having in turn the largest particle sizes (estimated between 70 and 80%), although the dispersion of loads is rather homogenous. Contrarily, the area closest to the surface has lower particle index and smaller particles, estimating a load distribution between 5 and 15% (Figure 2).

If the average results calculated from the percentage of loads for each studied area are analyzed, the existence of a tendency for the accumulation of loads towards the inner most areas of the coating (Table 1 and Figure 2) is confirmed.
TABLE 1

**Table 1: Estimation of the amount of gravel in differentiated areas**

| Area | AVERAGE GRAVEL AMOUNT (%) | |
|---|---|---|
| | Vibrated sample | Non-vibrated sample |
| Upper (1) | 9 | 13 |
| Upper-center (2) | 23 | 18 |
| Lower-center (3) | 37 | 36 |
| Lower (4) | 78 | 62 |

As has been indicated above, the mixture in the form of a semi-fluid mass is distributed on the board taking advantage of its relative fluidity. In the example discussed, the board has been provided with advantageously anti-adherent side partitions retaining the mixture during the step of vibrating thereof on the board.

## Claims

1. A method for obtaining petrous or ceramic substrates having a hybrid polymer coating, said coating having a thickness between 0.1 and 2 mm and comprising a mixture of micronized powder, gravels, base resin selected from polyurethane, polyester, epoxy or acrylic and in general pigments and additives for said resin, **characterized in that** it comprises the following steps:
a) preparing a base mixture comprising at least one first gravel of quartz, silica or silica sand of sizes comprised between 0.1 - 2 mm and micronized powder with inorganic loads in a mixer;
b) stirring the mentioned mixture;
c) preparing a base resin selected from polyurethane, polyester, epoxy or acrylic;
d) adding said resin to the mentioned mixture with a catalyst, additives for said resin and optionally pigments, and subsequent stirring in said mixer;
e) creating a vacuum inside said mixer affecting the mentioned mixture;
f) applying a layer of the semi-fluid mixture obtained on the said substrate and retaining on the same;
g) vibrating the substrate to displace the larger gravels towards the bottom;
h) accelerating the curing of the mixture by providing or generating heat, said mixture being consolidated on the substrate; and
i) finishing said coating by a mechanical treatment selected from polishing with abrasives, polishing with brushes or sand blasting and/or by a chemical treatment of acid etching of the coating polymer.

2. The method according to claim 1, wherein the mixture obtained after step g) has the following composition:
- 10-25% by weight of said micronized powder of siliceous materials comprising aluminium oxides, quartz and/or glass, or calcareous materials, with inorganic loads of petrographic origin;
- 40-60% by weight of said inorganic gravels of petrographic origin and/or comprising quartz, silica, silica sand, glass, recycled mirrors, silicon of sizes comprised between 0.1 -2 mm;
- 10-40% by weight of a polymerisable base resin selected from polyurethane, polyester, epoxy or acrylic ;
- approximately 3% by weight of additives particularly catalysts for said resin, and
- optionally up to 2% by weight of pigments;
- wherein in three areas of said applied coating the proportion of said gravel and micronized powder with respect to the thickness of the coating is the following:
- in a lower third of the coating, corresponding to the first inner most area at the interphase between the coating and the surface of the petrous or ceramic substrate, said gravel and micronized powder are in the range between 55%-85% by weight;
- in a middle third of the coating said gravel and micronized powder are in the range between 15%-60% by weight; and
- in an upper third of the coating, close to the visible surface of the coating, said gravel and micronized powder are in the range between 1%-15% by weight.

3. The method according to claim 1, **characterized in that** the mentioned gravels comprise gravels
selected by their sizes comprised between 0.1 and 0.5 mm.

4. The method according to claim 1, **characterized in that** in said first step for forming the mixture several gravels which are of different sizes and of the same or different materials and which are introduced in the mixture subjected to a stirring are used.

5. The method according to claim 1, **characterized in that** said mixture is prepared according to a process of continuously mixing in a screw extruding machine in which all the gravels and powder are loaded, injecting the liquid materials comprising resin, catalyst, and additives in a subsequent section of the path of the screw.

6. The method according to claim 1, **characterized in that** the step of applying the mixture on the substrate is performed with an applicator retaining a layer of mixture on said substrate and which is maintained during the step of curing.

7. A petrous or ceramic substrate incorporating on a visible surface a coating, as obtainable by a method according to any of the preceding claims 1 to 6.

8. The coated substrate according to claim 7, wherein said coating has a thickness comprised between 0.1 and 1 mm and preferably between 0.1 and 0.7 mm.

9. The coated substrate according to claim 7 or 8, wherein said coating has a hardness greater than 5 Mohs.

## Patentansprüche

1. Verfahren zum Erhalt von versteinerten oder keramischen Substraten, welche eine Hybridpolymerbeschichtung aufweisen, wobei die genannte Beschichtung eine Dicke zwischen 0,1 und 2 mm aufweisen und eine Mischung aus mikronisiertem Pulver, Kiesen, Grundharz ausgewählt aus Polyurethan-, Polyester-, Epoxid- oder Acrylharz und generell Pigmenten und Additiven für das genannte Harz umfasst, **dadurch gekennzeichnet, dass** es die folgenden Schritte umfasst:
a) das Zubereiten einer Basismischung umfassend mindestens einen ersten Kies aus Quarz, Kieselerde oder Quarzsand mit Größen die zwischen 0,1 - 2 mm liegen und mikronisiertes Pulver mit anorganischen Füllstoffen in einem Mischer;
b) das Rühren der erwähnten Mischung;
c) das Zubereiten eines Basisharzes ausgewählt aus Polyurethan-, Polyester-, Epoxid- oder Acrylharz;
d) das Hinzufügen des genannten Harzes zu der erwähnten Mischung mit einem Katalysator, Additiven für das genannte Harz und gegebenenfalls Pigmenten, und das nachfolgende Rühren in dem genannten Mischer;
e) das Erzeugen eines Vakuums innerhalb des genannten Mischers, welches die erwähnte Mischung beeinflusst;
f) das Auftragen einer Schicht der erhaltenen halbflüssigen Mischung auf dem genannten Substrat und das Zurückhalten derselben darauf;
g) das Rütteln des Substrats um die größeren Kiese nach unten zu versetzen;
h) das Beschleunigen der Härtung der Mischung durch das Bereitstellen oder die Erzeugung von Wärme, wobei die genannte Mischung auf dem Substrat verfestigt wird; und
i) das Vergüten der genannten Beschichtung durch eine mechanische Behandlung ausgewählt aus Polieren mit Abrasivstoffen, Polieren mit Bürsten oder Sandstrahlen und/oder durch eine chemische Behandlung mit Säureätzung des Beschichtungspolymers.

2. Verfahren nach Anspruch 1, wobei die nach Schritt g) erhaltene Mischung die folgende Zusammensetzung aufweist:
- 10-25 Gew.-% des genannten mikronisierten Pulvers aus kieselhaltigen Materialien umfassend Aluminiumoxide, Quarz und/oder Glas, oder kalkhaltigen Materialien, mit anorganischen Füllstoffen petrographischer Herkunft;
- 40-60 Gew.-% der genannten anorganischen Kiesen petrographischer Herkunft und/oder umfassend Quarz, Kieselerde, Quarzsand, Glas, recycelte Spiegel, Silikon mit Größen die zwischen 0,1 - 2 mm liegen;
- 10-40 Gew.-% eines polymerisierbaren Basisharzes ausgewählt aus Polyurethan-, Polyester-, Epoxid- oder Acrylharz;
- etwa 3 Gew.-% Additiven, insbesondere Katalysatoren für das genannte Harz, und
- gegebenenfalls bis zu 2 Gew.-% Pigmente;
- wobei in drei Zonen der genannten aufgetragenen Beschichtung das Verhältnis des genannten Kies und des mikronisierten Pulvers in Bezug auf die Dicke der Beschichtung Folgende ist:
- in einem unteren Drittel der Beschichtung, welches der ersten innersten Zone bei der Zwischenphase zwischen der Beschichtung und der Oberfläche des versteinerten oder keramischen Substrats entspricht, der genannte Kies und das mikronisierte Pulver in dem Bereich zwischen 55 Gew.-%-85 Gew.-% liegen;
- in einem mittleren Drittel der Beschichtung, der genannte Kies und das mikronisierte Pulver in dem Bereich zwischen 15 Gew.-%-60 Gew.-% liegen; und
- in einem oberen Drittel der Beschichtung, welches nahe an der sichtbaren Oberfläche der Beschichtung ist, der genannte Kies und das mikronisierte Pulver in dem Bereich zwischen 1 Gew.-%-15 Gew.-% liegen.

3. Verfahren nach Anspruch 1, **dadurch gekennzeichnet, dass** die erwähnten Kiese, Kiese umfassen, welche nach deren Größen ausgewählt werden, so dass sie zwischen 0,1 und 0,5 mm liegen.

4. Verfahren nach Anspruch 1, **dadurch gekennzeichnet, dass** in dem genannten ersten Schritt für das Bilden der Mischung mehrere Kiese verwendet werden, welche unterschiedliche Größen aufweisen und aus dem gleichen oder unterschiedlichen Materialien und welche in die dem Rühren ausgesetzte Mischung eingeführt werden.

5. Verfahren nach Anspruch 1, **dadurch gekennzeichnet, dass** die genannte Mischung nach einem kontinuierlichen Mischprozess in einer Schneckenextruder-Maschine, in welcher sämtliche Kiese und Pulver geladen werden, zubereitet wird, indem die flüssigen Materialien umfassend Harz, Katalysator und Additive in einem nachfolgenden Abschnitt des Pfades der Schnecke eingespritzt wird.

6. Verfahren nach Anspruch 1, **dadurch gekennzeichnet, dass** der Schritt des Auftragens der Mischung auf dem Substrat mit einem Auftragselement durchgeführt wird, welches eine Schicht der Mischung auf dem genannten Substrat zurückhält und dies während des Härtungsschrittes aufrechterhalten wird.

7. Versteinertes oder keramisches Substrat, welches eine Beschichtung auf einer sichtbaren Oberfläche umfasst, wie es durch ein Verfahren nach einem der vorhergehenden Ansprüche 1 bis 6 erhältlich ist.

8. Beschichtetes Substrat nach Anspruch 7, wobei die genannte Beschichtung eine Dicke aufweist, welche zwischen 0,1 und 1 mm und vorzugsweise zwischen 0,1 und 0,7 mm liegt.

9. Beschichtetes Substrat nach Anspruch 7 oder 8, wobei die genannte Beschichtung eine Härte grösser als 5 Mohs aufweist.

## Revendications

1. Une méthode pour obtenir des substrats pierreux ou céramiques ayant un revêtement polymère hybride, ce revêtement ayant une épaisseur de 0,1 à 2 mm et comportant un mélange de poudre micronisée, du gravier, une résine de base sélectionnée de polyuréthane, polyester, époxy ou acrylique et en général des pigments et des additifs pour cette résine, **caractérisée en ce qu'**elle comporte les étapes suivantes:
a) préparer un mélange de base comportant au moins un premier gravier de quartz, silice ou du sable de silice ayant des tailles de 0,1 à 2mm et de la poudre micronisée ayant des charges inorganiques dans un mélangeur;
b) brasser ce mélange;
c) préparer une résine de base sélectionnée de polyuréthane, polyester, époxy ou acrylique;
d) ajouter cette résine à ce mélange avec un catalyseur, des additifs pour cette résine et facultativement des pigments, et ensuite brasser dans ce mélangeur;
e) créer un vide à l'intérieur de ce mélangeur affectant ce mélange;
f) appliquer une couche du mélange semi-fluide obtenu sur ce substrat et l'y retenir;
g) faire vibrer le substrat pour déplacer les plus gros cailloux vers le fonds;
h) accélérer le durcissement du mélange en fournissant ou générant de la chaleur, ce mélange étant consolidé sur le substrat; et
i) finir ce revêtement par un traitement mécanique sélectionné entre polir avec des abrasives, polir avec des brosses ou décaper au jet de sable et/ou par un traitement chimique de décapage à l'acide du polymère de revêtement.

2. - La méthode conformément à la revendication 1, dans laquelle le mélange obtenu après l'étape g) a la composition suivante:
- 10-25% du poids de cette poudre micronisée de matériaux siliceux comportant des oxydes d'aluminium, du quartz et/ou du verre, ou des matériaux calcaires, ayant des charges inorganiques d'origine pétrographique;
- 40-60% du poids de ce gravier d'origine pétrographique et/ou comportant du quartz, silice, sable de silice, du verre, des miroirs recyclés, du silicium ayant des tailles comprises entre 0,1 et 2 mm;
- 10-40% du poids d'une résine de base polymérisable sélectionnée de polyuréthane, polyester, époxy ou acrylique;
- environ 3% du poids d'additifs particulièrement catalyseurs pour cette résine, et
- facultativement jusqu'à 2% du poids de pigments;
- dans laquelle dans trois régions de ce revêtement appliqué, la proportion de ce gravier et de la poudre micronisée par rapport à l'épaisseur du revêtement est la suivante:
- dans un tiers inférieur du revêtement, correspondant à la première région la plus à l'intérieur dans l'interface entre le revêtement et la surface du substrat pierreux ou céramique, ce gravier et la poudre micronisée sont dans la gamme de 55 à 85% du poids.
- dans un tiers du milieu du revêtement, ce gravier et la poudre micronisée sont dans la gamme de 15 à 60% du poids.
- dans un tiers supérieur du revêtement proche à la surface visible du revêtement, ce gravier et la poudre micronisée sont dans la gamme de 1 à 15% de poids,

3. - La méthode conformément à la revendication 1, **caractérisée en ce que** ce gravier comporte des cailloux sélectionnés par leurs tailles comprises antre 0,1 et 0,5 mm.

4. - La méthode conformément à la revendication 1, **caractérisée en ce que** dans cette première étape pour former le mélange on utilise plusieurs cailloux ayant des tailles différentes ou des matériaux différents et qui sont introduits dans le mélange soumis au brassage.

5. - La méthode conformément à la revendication 1, **caractérisée en ce que** ce mélange est préparé conformément à une méthode de mélange continue dans une machine extrudeuse à vis dans laquelle tous les cailloux et la poudre micronisée sont chargés, en injectant les matériaux liquides comportant la résine, le catalyseur et des additifs dans une section ultérieure du passage de la vis.

6. - La méthode conformément à la revendication 1, **caractérisée en ce que** l'étape d'appliquer le mélange sur le substrat est effectuée avec un applicateur retenant une couche de mélange sur ce substrat et qui y est retenue durant l'étape de durcissement.

7. - Un substrat pierreux ou céramique incorporé sur une surface visible du revêtement, tel qu'il peut être obtenu par une méthode conformément à une quelconque des revendications précédentes 1 à 6.

8. - Le substrat revêtu conformément à la revendication 7, dans lequel ce revêtement a une épaisseur comprise entre 0,1 et 1 mm, de préférence entre 0,1 et 0,7 mm.

9. - Le substrat revêtu conformément à la revendication 7 ou 8 dans lequel ce revêtement a un taux de dureté Mohs supérieur à 5.
